# EUROPEAN PATENT APPLICATION

(11) **EP 0 601 867 A1**
(43) Date of publication of application: **15.06.1994**
(21) Application number: 93309935.0
(22) Date of filing: 09.12.1993
(51) Int. Cl.: G05D 9/12, G01F 23/28, B05C 11/10

(54) **Liquid supply control arrangement**

(30) Priority: 11.12.1992 GB 9225873
(71) Applicant: BRITISH UNITED SHOE MACHINERY LIMITED, Belgrave Leicester LE4 5BX (GB); USM ESPANA, S.L., E-08027 Barcelona (ES)
(72) Inventor: Wu, Kane, Chung-11, Taoyuan (TW)
(74) Representative: Atkinson, Eric

(57) **Abstract**

For use e.g. in controlling the supply of liquid (4) to a container (2) forming part of an apparatus for applying a layer of molten hot melt to a shoe upper component to reinforce the component when the layer is consolidated on cooling, a liquid supply control arrangement is provided which has an emitter (10,20) and a receiver (12,22) respectively for projecting a beam of light onto a surface of the liquid in the container and for received reflected light from the surface. The receiver (12,22) generates an output signal having a value according to the intensity of light received thereby, or alternatively, where the light projected is pulsed, according to the time interval required between the emitter (10,20) emitting the pulse and the receiver (12,22) receiving it, and this value is compared with two pre-set values representing respectively a lower predetermined limit (L) and an upper predetermined limit (U) for the level of liquid in the container (2). When the value matches either one of these pre-set values, liquid delivery means (6,8) is operated either to replenish the liquid in the container (2) or to discontinue the supply of liquid to the container appropriately. The upper and lower limits may be adjusted.

## Description

This invention is concerned with improvements in or relating to a liquid supply control arrangement for a container for a liquid comprising regulating means for regulating the supply of liquid to the container, and liquid level monitoring means for monitoring the level of the liquid in the container, which means, in response to the level falling below a lower predetermined limit, causes the regulating means to operate to allow liquid to be supplied to the container and also, in response to the level exceeding an upper predetermined limit, causes the regulating means to operate to discontinue such supply.

Various liquid supply control arrangements are encountered, including mechanical arrangements (e.g. the ball-cock device in water supply systems), contact systems (e.g. where an element emits an electrical signal when it is contacted by or indeed when it ceases to be contacted by liquid in a container), and also non-contact systems (e.g. optical systems).

There is described in US-A-3 881 509 an apparatus for dispensing viscous liquid, more particularly a hot melt, on to a surface of a workpiece, said apparatus comprising a support for a workpiece and an applicator for dispensing a measured quantity of the viscous fluid in a desired configuration, said configuration of liquid being applied to a surface of the workpiece in a desired orientation thereon. In the particular case, the liquid, when cooled, consolidates to form a reinforcing layer on the surface of the workpiece, which in the particular case is a shoe upper component. The apparatus there described comprises a container which contains the viscous liquid and provides a reservoir from which said liquid can be supplied to the applicator and, in order to maintain the liquid in the container at a desired level, a liquid supply control arrangement is provided, comprising an emitter for directing a beam of light adjacent to the surface of the liquid and a receiver for receiving light from the emitter. In addition, said arrangement comprises a plunger which is movable, across the beam of light, for partial immersion into the liquid in the container, retraction of the plunger thus causing a "curtain" of liquid to be drawn up across the beam of light. Depending on the amount of liquid in the container, the width of the curtain will vary, and thus the extent to which the light beam is blocked by the curtain will also vary. The receiver generates an output signal the value of which varies according to the amount of light received from the emitter, and control circuitry is provided for supplying a corresponding control signal to regulating means by which the supply of liquid to the container is regulated.

The problem with invasive techniques of measuring liquid levels is that viscous liquids are often susceptible to local variations in viscosity with the consequence that the viscosity at any one region cannot be relied upon and may give a spurious indication of the state of the whole liquid. What is more, particularly in connection with molten viscous liquids, the invading item used in an invasive technique may be subject over a period of time to material build-up due to cooling and solidification. The build-up may eventually affect the accuracy of whatever method of level determination the invading item is used for.

It is one of the various objects of the present invention to provide an improved liquid supply control arrangement for a container for a liquid, in the operation of which problems arising from contact with the liquid can be avoided.

It is another of the various objects of the present invention to provide an improved container for a liquid equipped with a liquid supply control arrangement in the operation of which problems arising from contact with the liquid can be avoided.

It is a still further object of the present invention to provide an improved apparatus for dispensing viscous liquid, in the operation of which the supply of liquid to a reservoir therefor is automatically achieved but in the operation of which problems arising from contact with the liquid can be avoided.

The first object set out above is achieved in accordance with the invention, in a liquid supply control arrangement as set out in the first paragraph above, in that the monitoring means comprises an emitter for emitting radiation on to the surface of the liquid in the container, a receiver for receiving radiation reflected back from the liquid surface and generating an output signal the value of which varies according to the reflected radiation thus received, and control circuitry to which said output signal is supplied by the receiver and which processes said signal and supplies a corresponding control signal to the regulating means.

In one embodiment of the invention, furthermore, the emitter emits a constant level of radiation and the receiver receives reflected radiation in amounts determined according to the distance of the liquid level from the emitter and/or receiver and generates an output signal whose value is determined according to such amounts, the control arrangement being so constructed and arranged that in processing the output signal from the receiver the control circuitry compares the value thereof with two pre-set values, representing respectively the lower and upper predetermined limits and, in response to the matching of said value with one of said pre-set values, supplies an appropriate control signal to the regulating means. More particularly, the corresponding control signal to the regulating means is such that, in response to the level of liquid in the container falling below the lower predetermined level, the regulating means operates to allow liquid to be supplied to the container, while in response to the level exceeding the upper predetermined limit, the regulating means is operated to discontinue such supply.

In an alternative embodiment, on the other hand, the emitter emits pulses of radiation and the receiver receives pulsed reflected radiation, each received pulse being spaced from the emission of a corresponding pulse by an interval the duration of which is determined according to the distance of the liquid level from the emitter and/or receiver, the control arrangement being so constructed and arranged that in processing the output signal from the receiver the control circuitry calculates a value corresponding to the duration of the said interval and compares it with two pre-set values, representing respectively the lower and upper predetermined limits, and, in response to the matching of said value with one of said pre-set values, supplies an appropriate signal to the regulating means.

It will also be appreciated that, in using a liquid supply control arrangement in accordance with the present invention, the need for an operator to be concerned as to the level of liquid in the container is avoided since the replenishment of liquid into the container can now take place automatically. Moreover, since the monitoring means is of the non-contact type, the problems associated with control arrangements of the "contact" type can readily be avoided.

In some instances it may be desirable, e.g. because of the degree of viscosity of the liquid whose level is being monitored, that the pre-set values representing the lower and upper predetermined limits are adjustable. Moreover, in some instances the upper and lower predetermined limits may indeed be the same, and thus the pre-set values for each may be the same value. In general, however, it will be the case that the lower predetermined limit will reflect the lowest liquid level which can be tolerated while the upper limit will be set according to a reasonable additional quantity of liquid in the container bearing in mind not only the need to maintain the liquid in a given condition (e.g. in the case of a hot melt in a molten condition) while at the same time avoiding constantly switching the regulating means on and off.

Other aspects of the invention will be found set out as appended Claims 8 and 9.

There now follows a detailed description of one liquid supply control arrangement, a container for a liquid and also an apparatus for dispensing a viscous liquid, each in accordance with the invention. It will of course be appreciated that this arrangement, this container and this apparatus have each been selected for description merely by way of non-limiting example of the invention.

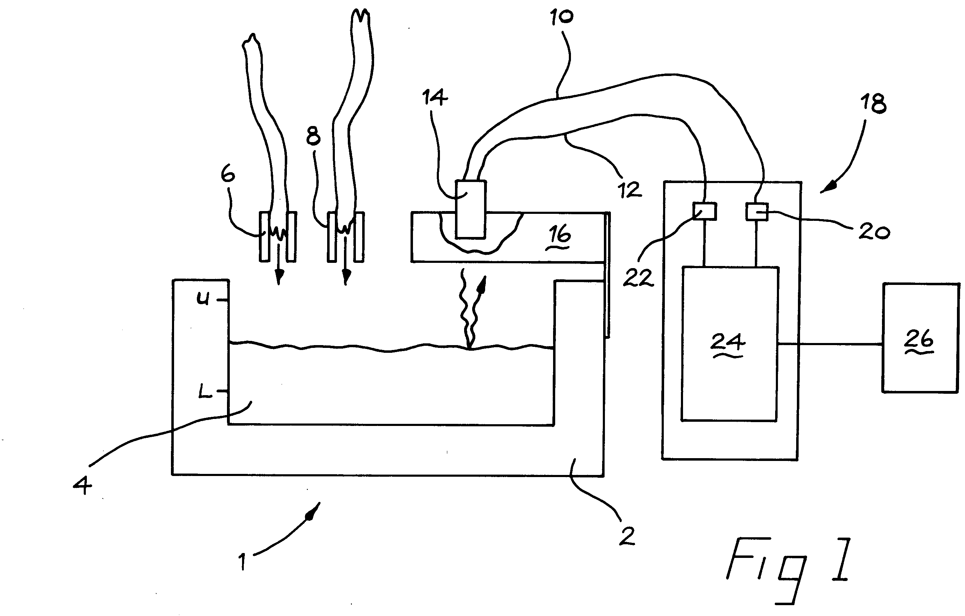

In the accompanying drawing is shown a schematic diagram of a container for a liquid having a liquid supply control arrangement in accordance with the invention.

Referring to the drawing, there is shown a container 2 which forms part of an apparatus for dispensing viscous liquid generally similar to the apparatus described in US-A-3 881 509, said apparatus being an apparatus for applying a layer of molten reinforcing material to the surface of a workpiece in the form of a shoe upper component. (The container 2 of the present invention thus corresponds to the container 16, 18 of said apparatus.) The apparatus in accordance with the present invention is indicated in the drawing generally at 1.

The container 2 contains viscous liquid 4 which is replenished, as it is drawn off for application to a workpiece surface, by delivery means 6, 8, said means comprising two heaters 6, 8 to each of which a hot melt, in rod form, is fed from a roll, the heaters serving to melt the hot melt, which then flows through the heaters into the container.

Mounted adjacent one edge of the container 2 is a supporting sleeve 14 in which two bundles of optical fibres 10, 12 terminate. The supporting sleeve 14 is secured to a housing 16 which is enclosed on all sides except its bottom, i.e. the side closest to the surface of the liquid. Attached to the ends of each of the bundles of optical fibres 10, 12 within the sleeve 14 is a lens (not shown).

Associated with the bundle 10 and its associated lens is a light source 20, typically producing a visible red light. The light source, bundle 10 and lens constitute an emitter of the control arrangement in accordance with the invention.

Associated with the bundle 12 and its associated lens, on the other hand, is a photoelectric switch 22, the switch, bundle 12 and lens constituting a receiver of the control arrangement.

The light source 20 and the photoelectric switch 22 are accommodated in a housing 18 remote from the housing 16, and connected via the bundles of optical fibres, such that light from the light source is conveyed along the first bundle 10 and projected on to the surface of the liquid 4, while light reflected back from the liquid surface is received through the lens of the receiver and passes along the bundle 12 of optical fibres to the photoelectric switch 22.

The sleeve 14 and housing 16 act to shield the lenses from ambient light falling directly thereon by reason of their being open only on their underside. Although a quantity of ambient light will be reflected from the surface of the liquid 4, nevertheless the housing has the effect of "shadowing" a portion of the liquid surface so as to reduce the extent of reflection of the ambient light.

The control arrangement in accordance with the invention also comprises control circuitry generally designated 24 which is operatively connected to the light source 20 and the photoelectric cell 22, as will now be described. Under the control of the control circuitry 24 an electrical signal is supplied to the light source 20 in response to which a beam of light is generated by the source 20 and, through the bundle 10 and lens, is projected onto the surface of the liquid 4. Light which is reflected from the liquid surface falls on the lens associated with the bundle 12 and thus passes along said bundle to the photoelectric switch 22, in response to which the switch 22 generates an output signal which it supplies to the control circuitry 24.

The control circuitry 24 may be configured in various ways. In each case, however, a value is calculated according to the reflected light received by the photoelectric switch 22 and this value is compared, by the circuitry 24, with pre-set values stored in a computer memory, the computer 26 also being used to calculate the value attributed to the output signal. The pre-set values stored in the computer memory represent respectively a lower predetermined level for the liquid 4 in the container 2, said limit being indicated by the reference letter L in the drawing, and an upper predetermined limit for said liquid, being indicated by the reference letter U.

As already mentioned various configurations are possible for the control circuitry 24. In one such configuration the output signal of the photoelectric receiver 22 is determined according to the intensity of the light incident upon its associated lens; the greater the light intensity, the greater the size of the output signal, which in this case is in the form of current. It will of course be appreciated that the intensity of the light falling on the lens is dependent upon the distance through which the light travels in being projected onto the surface and being reflected back; hence, the intensity increases with a decrease in the length of the path, and decreases with an increase in the length of such path. It thus follows that the value of the output signal from the photoelectric switch 22, in terms of the value of the current, is indicative of the level of the liquid.

In another configuration of the control circuitry 24, the electrical signal to the light source 20 is pulsed, and in response the output of the light source is a succession of light pulses. In this case, therefore, the control circuitry 24 comprises a sensing resistor (not shown) to which the pulses are supplied from the switch 22, again in the form of current, and which measures the amplitude of each pulse in terms of a voltage. In this case, therefore, the pre-set values are both in the form of voltage reference levels with which the voltage thus measured can be compared. When the liquid level in the container 2 falls below the predetermined lower limit L, the light intensity supplied to the switch 22 also falls to a low level such that the voltage drop reduced across the sensing resistor is below the first voltage reference level. When, on the other hand, the upper limit U is exceeded, leading to a much higher light intensity, the voltage across the sensing resistor exceeds the high voltage reference level which has been pre-set.

In yet another configuration, again using pulsed light, variations in the time taken for the light to be projected onto the surface of the liquid and be reflected back are measured and compared with pre-set values for such time. It will of course be appreciated that a time shift will be identifiable between the pulses emitted by the emitter and those received by the receiver, and this shift will be indicative of the length of the path over which the light must travel in being projected and reflected, and thus be a measure of the distance of the surface of the liquid from the lenses of the emitter and receiver, and thus a measure of the level of the liquid. The pre-set values of course again reflect a predetermined lower limit L and a predetermined upper limit U for the surface of the liquid.

Whichever configuration is used, in response to a matching of the value of the output signal from the switch 22 with one of the pre-set values, regulating means controlling the feed of hot melt in rod form to the delivery means 6, 8 is operated. In the case of the matching pre-set value being the lower limit L, the regulating means is operated to initiate feeding of the rod hot melt, thereby causing molten hot melt to be supplied to the container. Where, on the other hand, the pre-set value represents the upper limit U, such supply of hot melt in molten form is discontinued. In this way, the liquid in the container is automatically replenished whenever its level drops below the lower limit L, such replenishment being controlled to a maximum determined by the upper limit U.

The pre-set values, and thus the positions of the upper and lower limits U, L, may be rendered variable according to the nature of the liquid being handled and also the requirements for the supply of liquid from the container. Such variation is readily achieved using the computer 26, according to the configuration of the control circuitry. Thus, it may be a question of varying a value to be compared with the current value or with a voltage or indeed with a time shift.

Whereas the liquid supply control arrangement has been described with reference to an apparatus of the type described in US-A-3 881 509 and with reference to a container for liquid of the type forming part of such apparatus, it will be appreciated that the control arrangement in accordance with the present invention may be used also in a variety of different applications, e.g. in a steam generating apparatus for use in conditioning shoe uppers and indeed in e.g. dust extraction apparatus which relies upon drawing dust-laden air through a liquid.

## Claims

1. Liquid supply control arrangement for a container for a liquid comprising
regulating means for regulating the supply of liquid (4) to the container (2), and
liquid level monitoring means (10,20; 12,22; 24)for monitoring the level of the liquid in the container, which means, in response to the level falling below a lower predetermined limit (L), causes the regulating means to operate to allow liquid to be supplied to the container and also, in response to the level exceeding an upper predetermined limit (U), causes the regulating means to operate to discontinue such supply,
characterised in that the monitoring means comprises
an emitter (10,20) for emitting radiation on to the surface of the liquid in the container,
a receiver (12,22) for receiving radiation reflected back from the liquid surface and generating an output signal the value of which varies according to the reflected radiation thus received, and
control circuitry (24) to which said output signal is supplied by the receiver and which processes said signal and supplies a corresponding control signal to the regulating means.

2. Control arrangement according to Claim 1 characterised in that the emitter (10,20) emits a constant level of radiation and the receiver (12,22) receives reflected radiation in amounts determined according to the distance of the liquid level from the emitter and/or receiver and generates an output signal whose value is determined according to such amounts, and in that in processing the output signal from the receiver the control circuitry (24) compares the value thereof
with two pre-set values, representing respectively the lower and upper predetermined limits (L;U) and, in response to the matching of said value with one of said pre-set values, supplies an appropriate control signal to the regulating means.

3. Control arrangement according to Claim 1 characterised in that the emitter (10,20) emits pulses of radiation and the receiver (12,22) receives pulsed reflected radiation, each received pulse being spaced from the emission of a corresponding pulse by an interval the duration of which is determined according to the distance of the liquid level from the emitter and/or receiver,
and in that in processing the output signal from the receiver the control circuitry (24) calculates a value corresponding to the duration of the said interval and compares it with two pre-set values, representing respectively the lower and upper predetermined limits (L;U), and, in response to the matching of said value with one of said pre-set values, supplies an appropriate signal to the regulating means.

4. Control arrangement according to Claim 3 characterised in that the pre-set values representing the lower and upper predetermined limits (L;U) are adjustable.

5. Control arrangement according to any of the preceding Claims characterised in that the pre-set values representing respectively the lower and upper predetermined limits (L;U) are different from one another.

6. Control arrangement accordintg to any one of the preceding Claims characterised in that the emitter (10,20) emits visible red light.

7. Control arrangement according to any one of the preceding Claims characterised in that the emitter (10,20) comprises optical fibre means (10) and a remote source (20).

8. Container for a liquid (4) characterised by a liquid supply control arrangement according to any one of the preceding Claims.

9. Apparatus for dispensing a viscous liquid, e.g. a hot melt, on to a surface of a workpiece, comprising
a support for a workpiece, and
an applicator for dispensing a measured quantity pf the viscous liquid in a desired configuration, wherein said configuration of liquid is applied to a surface of the workpiece in a desired orientation thereon,
said apparatus being characterised by a container (2) according to Claim 8, which container contains the viscous liquid (4) and provides a reservoir from which said liquid can be applied to the applicator.
